# EUROPEAN PATENT APPLICATION

(11) **EP 1 815 897 A1**
(43) Date of publication of application: **08.08.2007**
(21) Application number: 05807017.8
(22) Date of filing: 16.11.2005
(51) Int. Cl.: A63F 13/00, A63F 13/12

(54) **INFORMATION PROCESSING DEVICE, DATA PROCESSING METHOD, PROGRAM, AND RECORDING MEDIUM**

(30) Priority: 26.11.2004 JP 2004342985
(71) Applicant: Kabushiki Kaisha Sega doing business as Sega Corporation, Tokyo 144-8531 (JP)
(72) Inventor: KONUMA, Takuji c/o KABUSHIKI KAISHA SEGA, Tokyo 1448531 (JP)
(74) Representative: Brown, Kenneth Richard
(86) International application number: PCT/JP2005/021015
(87) International publication number: WO 2006/057185

(57) **Abstract**

An information processing device according to the present invention is communicably connected on a network and is capable of executing online a competitive type electronic game with a game opponent, and is provided with: storage means for storing a program for the competitive type electronic game, operation means for operation by an operator, calculation means, and image generation means. The calculation means calculates a forecasted future position of an operation target object in a game space in response to operation by the operator, then packetizes information thereof and sends this via the network to an opponent terminal and also receives packets sent from the opponent terminal. When an omission or delay has occurred in reception of the packet, the image generation means generates a game image including an opponent object using the forecasted future position contained in a packet that has been received prior to a current reception. Thus, even when a delay in data transmission or packet loss or like has occurred, a calculation amount in each terminal for displaying opponent characters can be reduced.

## Description

### BACKGROUND

The present invention relates to information processing devices that are communicably connected via a network and capable of executing online a competitive type electronic game with a game opponent, data processing methods in these information processing devices, programs for executing each procedure in these data processing methods, and computer-readable recording media on which these programs are recorded.

In recent years the advancement of IT (information technology) has had great impact also in the field of electronic games and online competitive game systems are being provided in which a plurality of users simultaneously operate terminals so as to carry out a competitive type electronic game (amusement) via a network such as the Internet.

Since the Internet itself is an unstable network environment, delays in data (packet) reception and packet loss (omissions) sometimes occur in these online competitive game systems. And since real time capabilities are demanded in online competitive games using the Internet environment, delays in data reception or packet loss adversely affect the quality of the game. Delays in data reception and packet loss are not limited to the Internet and can also occur in a WAN (wide area network) or in public telephone lines, and packet omissions and delays tend to occur easily in wireless LANs and the like due to the effect of noise.

If no countermeasure is implemented when a delay in data reception or packet loss has occurred, position information of the partner character (display object) cannot be obtained at that reception timing and therefore the partner character will not be displayed on the monitor of one's own terminal (the electronic amusement device that a user is operating himself). That is, in this case, the partner character momentarily disappears (is not displayed) on the screen in the times series for display, which will startle the user.

A process is known to improve this in which, when a delay in data reception or packet loss has occurred, the partner character is substitutively displayed using position information obtained by using one preceding previous packet that was able to be received normally. In this case, although there is no "gap" (instant) in which the partner character is not displayed, when a return is made to a normal reception state, the partner character is displayed seemingly jumping from the state up to then in which it had been momentarily stopped to the display position at the time of normal reception. In this case also the user is made to feel a sense of unnaturalness, which lessens the game environment.

Accordingly, methods have been proposed to improve these circumstances, for example in patent document 1 position information of the partner character of several preceding video frames is used when a delay in data reception or packet loss has occurred to calculate and estimate the current position information in the game (virtual) space and this estimated information is used to carry out substitutive display. Patent document 1: United States Patent no. 6,042,477

### Disclosure of Invention

### Problems to be Resolved by the Invention

However, in the substitutive display using estimated information described in patent document 1, it is necessary for one's own terminal to carry out estimation calculations for all the characters (display objects) of partners who could not receive the packet. Thus, the load for calculations involving partner characters is increased in one's own terminal and either the calculation performance of the CPU has to be raised proportionally or one must accept reductions in calculation speeds. This is a factor that hinders both reductions in manufacturing costs for electronic amusement devices, which constitute each of the game terminals, and improvements in the game environment.

Accordingly, the present invention has been devised in light of these circumstances and it is an object therein to provide an information processing device that, even when a delay in data transmission or packet loss or the like has occurred, allows each terminal to always obtain and display simply and without requiring calculation highly accurate position information of the partner character at the current point in time, and by which the amount of calculation for displaying partner characters on each terminal can be decreased.

### Solutions to Resolve the Problems

In order to resolve these problems, an information processing device according to the present invention includes a device that is communicably connected on a network and is capable of executing online a competitive type electronic game with a game opponent, comprising: storage means for storing information resources including procedures for the competitive type electronic game, operation means for operation by an operator, a calculation device having calculation means for calculating a forecasted future position of an operation target object in a virtual space in response to operation performed by the operator on the operation means, sending means for packetizing and sending information for the competitive type electronic game including the forecasted future position via the network to the opponent, and receiving means for receiving packets sent from the opponent via the network, and image generation means for, when an omission or delay has occurred in reception of the packet, generating a game image including the competition target object using the forecasted future position contained in a packet that has been received prior to a current reception.

Furthermore, it is preferable that the calculation means has determination means for determining whether or not the forecasted future position has changed from a previously calculated forecasted position, and that the sending means sends information of the forecasted future position when a determination is made by the determination means that the forecasted future position has changed.

Further still, it is preferable that information for the competitive type electronic game includes the forecasted future position of at least one display timing later than a current display timing, for example the next display timing after the current display timing, the next display timing after that, or the next display timing after that.

Or it is preferable that, when an omission or delay has occurred in reception of the packet, the image generation means generates a game image including the competition target object using the forecasted future position contained in a packet that has been received at a display timing two or more timings earlier than a current reception.

Furthermore, a data processing method according to the present invention includes a method that can be effectively implemented by being used in an information processing device according to the present invention, this device being communicably connected on a network and is capable of executing online a competitive type electronic game with a game opponent, wherein the method is provided with: a step of storing information resources including procedures for the competitive type electronic game; a step of calculating a forecasted future position of an operation target object in a virtual space in response to operation by an operator; a step of packetizing and sending information for the competitive type electronic game including the forecasted future position via the network to the opponent; a step of receiving packets sent from the opponent via the network; and a step of, when an omission or delay has occurred in reception of the packet, generating a game image including the competition target object using the forecasted future position contained in a packet that has been received prior to a current reception.

Further still, it is useful that information including the forecasted future position of at least one display timing later than a current display timing is used as information for the competitive type electronic game.

And further still, a program according to the present invention includes a program for executing on a computer a procedure of each step of the data processing method according to the present invention.

Yet further still, a recording medium according to the present invention includes a computer-readable recording medium on which is recorded a program for executing on a computer a procedure of each step of the data processing method according to the present invention.

Furthermore, considering the circumstances described up to this point, the present invention can also be expressed in the following manner. That is, the present invention is provided with storage means for storing information resources including procedures for an electronic game, operation means for operation by an operator, a calculation device that, based on the procedures, executes information processing for a competitive type electronic game including processing in which a position of an operation target object in a virtual space is changed in response to operation carried out by the operator on the operation means, and image generation means for generating a game image including the competition target object of the competitive type electronic game based on a calculation result of the calculation device, wherein in the information processing device that is communicably connected on a network and is capable of executing online the competitive type electronic game with a game opponent, the calculation device includes calculation means for calculating a current position and a forecasted future position of the operation target object in the virtual space, sending means for packetizing and sending information for the competitive type electronic game including the current position of the operation target object and the forecasted future position via the network to the opponent, and receiving means for receiving packets sent from the opponent via the network, and wherein, when an omission or delay has occurred in reception of the packet, the image generation means generates a game image including the competition target object using the forecasted future position contained in a packet that has been received prior to a current reception.

Furthermore, it is preferable that the calculation means includes determination means for determining whether or not the forecasted position at a current point in time has changed from a previous forecasted position, and the sending means sends information of the forecasted position when a determination has been made by the determination means that the forecasted position has changed.

Further still, it is preferable that information of the forecasted position is a forecasted position of a target at a next display timing after the current display timing.

And further still, it is preferable that information of the forecasted position includes two forecasted positions of the target at the next display timing after the current display timing and the next display timing after that.

Yet further still, it is effective that information of the forecasted position includes three or more forecasted positions of the target at a next three or more display timings after the current display timing.

Additionally, it is preferable that this is configured such that, when an omission or delay has occurred in reception of the packet, the image generation means generates a game image including the competition target object using the forecasted future position contained in a packet that has been received at a display timing two or more timings earlier than a current reception.

Furthermore, the present invention includes a data processing method for an electronic game in an information processing device in which information processing for a competitive type electronic game including processing in which a position of an operation target object in a virtual space is changed in response to operation carried out by the operator on the operation means may be executed in a calculation device based on a predetermined procedure, and be configured so that the competition target object of the operator is displayed on display means, and be capable of executing online a competitive type electronic game with a game opponent communicably connected on a network, wherein the calculation device executes: a step of calculating a current position and a forecasted future position of the operation target object in a virtual space in response to operation by the operator, a step of packetizing and sending information for the competitive type electronic game including the current position of the operation target object and the forecasted future position via the network to the opponent, a step of receiving packets sent from the opponent via the network, and, when an omission or delay has occurred in reception of the packet, a step of displaying on a game screen the competition target object using the forecasted future position contained in a packet that has been received prior to a current reception.

In this case it is preferable that information of the forecasted position is a forecasted position of an operation target object at a next display timing after the current display timing.

Or it is preferable that information of the forecasted position includes two forecasted positions of the operation target object at the next display timing after the current display timing and the next display timing after that.

### Advantages

With the present invention, one's own terminal (electronic amusement device) sends online to a partner terminal (electronic amusement device) not only the current position of the display object of one's own terminal in the virtual space, but also a forecasted position by forecasting a future position, for example, that of the next display timing. Thus, when a delay or loss has occurred in a packet that should have been sent from the partner, the partner terminal reads forecasted future position from a packet that has been received normally in the past, that is, information of a position of the target in the current point in time, and can display the target in that position. Thus, even when a delay in data transmission or packet loss has occurred, highly accurate position information of the partner character at the current point in time can always be obtained and displayed reliably and without requiring calculation, and as a result the amount of calculation for displaying the partner character on one's own terminal can be reduced.

### DESCRIPTION OF DRAWINGS

FIG. 1 is a configuration view that schematically shows an online competitive game system, which is one embodiment of an information processing device according to the present invention.
FIG. 2 is a block diagram showing a configuration of game devices.
FIG. 3 is a functional block diagram showing an outline of processes that are executed in each game device.
FIG. 4 is a flowchart showing an outline of a sending process and a receiving process that are executed in each game device.
FIG. 5 is a schematic drawing showing usage conditions of position information in packets executed by each game device when a data delay or packet loss has occurred.
FIG. 6 is a flowchart showing an outline of a sending process and a receiving process in each game device executed as a modified example.
FIG. 7 is a schematic drawing showing usage conditions of position information in packets executed by each game device when a data delay or packet loss has occurred in the modified example shown in FIG. 6.

### DETAILED DESCRIPTION

Hereinafter, embodiments of the present invention are described in detail. It should be noted that the following embodiments are examples for describing the present invention and there is no intention that the present invention be limited to these embodiments. The present invention can be achieved in various embodiments without departing from the spirit thereof. Furthermore, unless otherwise noted, positional relationships such as up/down and left/right are based on the positional relationships shown in the figures. Further still, the dimensional ratios of the figures are not limited to the ratios shown in the figures.

The present embodiment involves providing an online competitive game system in which a single competitive type game is executed while a plurality of terminals (game terminals) carry out bidirectional data communications with each other via the Internet, and a game device is used for each terminal in this online competitive game system as an information processing device (electronic amusement device) according to the present invention.

Furthermore, in the present embodiment, each game device is provided with storage means for storing information resources including predetermined procedures (program), operation means for operation by an operator, a calculation device that, based on the procedures, executes information processing for the competitive type game in response to operation carried out by the operator on the operation means, and display means for displaying game objects based on calculation results of the calculation device, and is communicably connected to a network such as the Internet to enable execution of the online competitive game with partners.

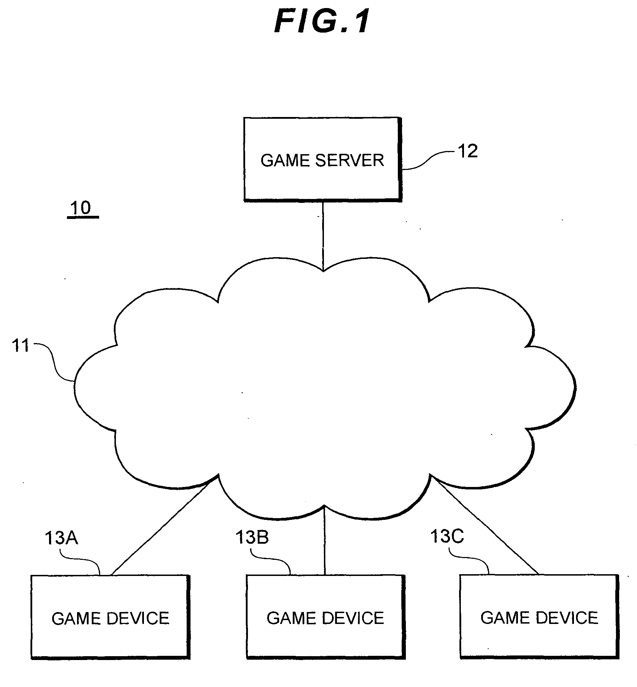

FIG. 1 is a configuration view that schematically shows an online competitive game system, which is one embodiment of an information processing device according to the present invention. An online competitive game system 10 is provided with a game server 12 and a plurality of game devices 13A to 13C as game terminals (clients), which are respectively connected to an Internet 11 as a communications network. The game server 12 is configured using a commonly known server computer system for example and performs integrated management of the competitive game executed on the game devices 13A to 13C. On the other hand, the game devices 13A to 13C are configured using such devices as commonly known personal computers (PCs), home game devices, mobile game devices, mobile telephones, mobile information terminals, and arcade game machines or the like, and two or more devices form a single competitive group to execute a competitive game via the Internet 11 under the management of the game server 12. The Internet 11 makes possible bidirectional communication of packetized data based on a TCP/IP protocol or a UDP protocol for example.

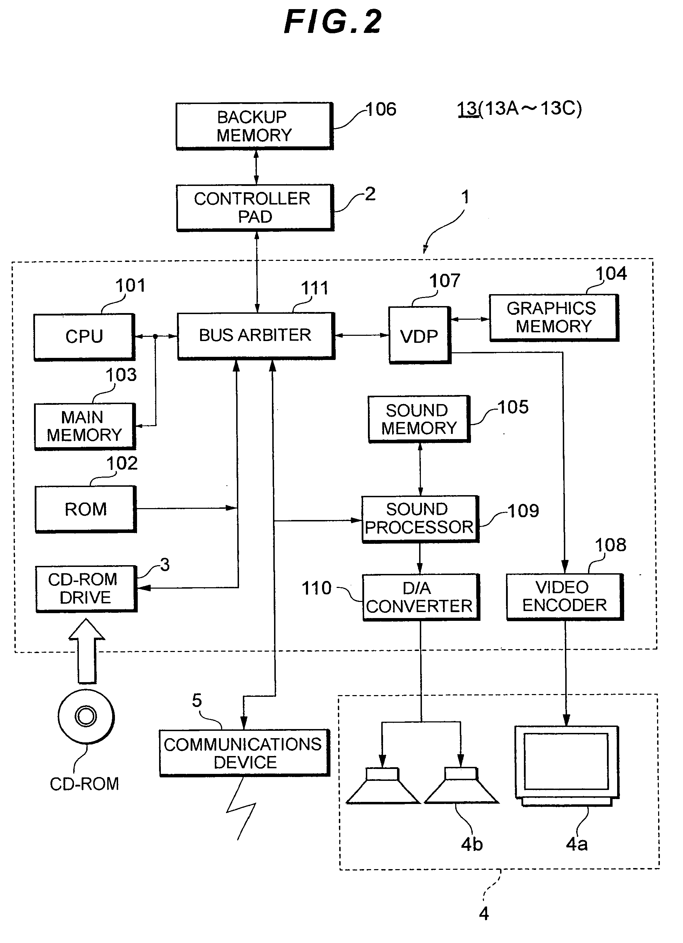

The game devices 13A to 13C (hereinafter indicated together with symbol "13" as required) are respectively configured as shown in FIG. 2. That is, the game devices 13 have a CPU and execute information processing for image processing and the like accompanying an electronic game. This image processing involves setting a three-dimensional space coordinate system and a three-dimensional viewpoint coordinate system that follows movement of a viewpoint, and executing image display control such that display objects (display characters and the like) positioned in a virtual three-dimensional space are displayed on a display screen by performing coordinate transformation in the viewpoint coordinate system using projections in which the display objects pertaining to the space coordinate system issue from the viewpoint.

Specifically, as shown in FIG. 2, the game device 13 (information processing device) is provided with a control unit 1 configured centered on a CPU 101 and the like, a controller pad 2, which is an input device for a game player to input operation signals into the control unit 1, a CD-ROM drive 3, which is an external storage device for storing an operating system (hereinafter referred to as "OS") and an application program (game program) and supplying these programs as required to the control unit 1, and an output device 4, which is for providing images and sound to the game player and is constituted by such components as a display device 4a and speakers 4b.

Furthermore, the game device 13 is provided with a communications device 5 as an interface for sending and receiving data to and from other computers and game devices via the Internet 11. It should be noted that the external storage medium is not limited to the CD-ROM shown in the drawing and may be any recording medium or the like capable of writing and saving data to be supplied to the control unit 1.

When power is turned on to start a game with the game device 13, an unshown boot program loader loads a boot program (also referred to as an "initial program") in the CPU 101, which is stored on a ROM 102, and the CPU 101 executes the boot program. In accordance with the boot program, the CPU 101 loads into a main memory 103 all or necessary parts of the OS stored in the external recording medium such as the CD-ROM and runs the OS.

Under the control of the OS, the CPU 101 loads into the main memory 103 all or necessary parts of the application program (hereinafter also referred to simply as "program") stored on the CD-ROM or the like and, as necessary, loads into a graphics memory 104 drawing data and image data stored on the CD-ROM or the like and loads sound data into a sound memory 105.

Furthermore, under the control of the OS, the CPU 101 executes the application program that is stored in the main memory 103. Data resulting from execution of the application program is written whenever necessary into the main memory 103 and a backup memory 106 and referenced. The backup memory 106 stores data so that when the power is cut off by the game being interrupted or the like, the status of the game up until that time can be held. It should be noted that the present embodiment is configured such that the OS and the application program and the like are provided from an external recording medium such as a CD-ROM, but this may also be configured for example so as to be provided from a ROM or another computer via a network.

A video display processor (VDP) 107 reads out drawing data necessary for the display of images stored in the graphics memory 104 and, based on commands and data from the CPU 101 resulting from execution of the application program, carries out various types of information processing (image processing) and generates image data. Various types of image processing includes for example texture mapping, light source processing, and display priority processing and the like.

In order to display the thus-generated image data on the display device 4a, **the VDP 107 outputs the image data to a video encoder 108. It should be noted that** generated image data may be set to be written to a frame buffer memory for example and read out from the frame buffer memory at a predetermined timing.

A sound processor 109 reads out sound data stored in the sound memory 105 and, based on commands and data from the CPU 101 resulting from execution of the application program, carries out various types of information processing (audio processing). The various types of audio processing here include processing for effects and processing for mixing for example. Sound data that has undergone the various types of audio processing in this manner is converted to analog data by a D/A converter 110 then outputted to the speakers. A bus arbiter 111 carries out control between the various units connected via data transmission channels (buses and the like). For example, the bus arbiter 111 has functions such as determining an order of priority among the units to determine the unit to occupy the bus and assigning a bus occupation time to the unit occupying the bus.

The game device 13 configured as described above is capable of achieving various functions including functions relating to the present invention by having its CPU 101 execute the program that has been read in from the external recording medium such as the CD-ROM.

Here, the configuration of the control unit 1 centered on the CPU 101 (but excluding the ROM 102, the graphics memory 104, the sound memory 105, and the CD-ROM drive 3) is functionally achieved by a calculation device, which is one structural element of the present invention. The controller pad 2 corresponds to an operation means, which is one structural element of the present invention. Furthermore, the display device 4a corresponds to a display means, which is one structural element of the present invention. Further still, the ROM 102, the graphics memory 104, and the sound memory 105 correspond to a storage means, which is one structural element of the present invention.

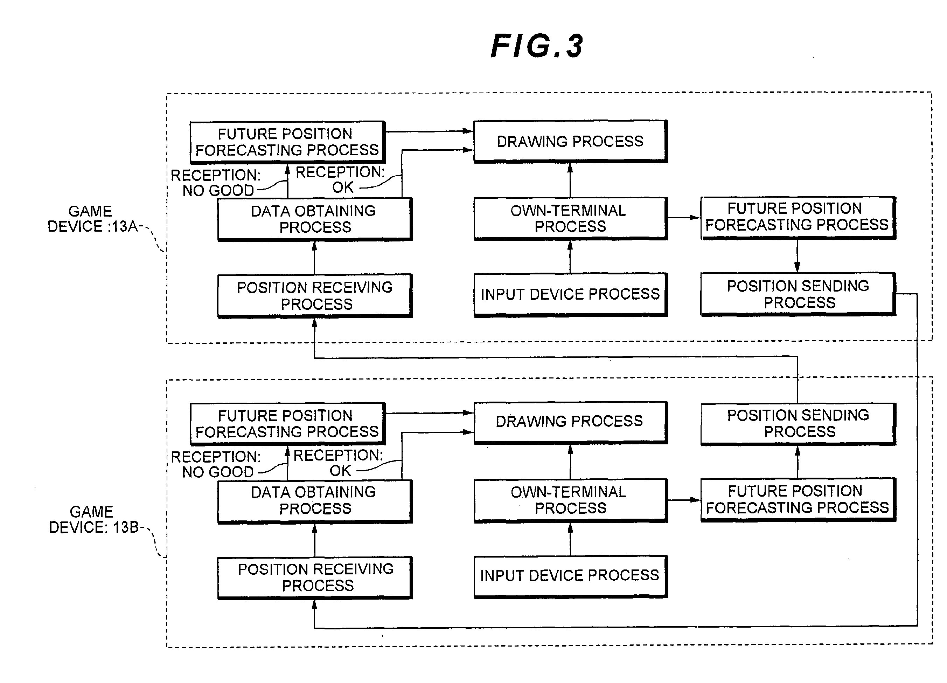

When a desired competitive game is to be executed via the Internet 11 by a plurality of game devices 13, for example the game device 13A and 13B, configured as described above, game processing is executed as shown functionally in FIG. 3 centered on the CPU 101 of the respective game devices 13.

That is, the game device 13A, which is one's own terminal, receives as packets position information (position receiving process) in the game space of a partner character (display object) sent via the Internet 11 from the game device 13B, which is a partner terminal, and obtains position information data from the received packets (data obtaining process). In parallel to the obtaining of position data of the partner character, operation information from the controller pad 2 of the game device 13A is read in (input device process) and one's own character (operation object) causes game play (own-terminal process) in accordance with the game program. Following this, when position information of the partner character has been able to be obtained, in other words, when there has been no delay in data reception or packet loss, a predetermined process is carried out for drawing, which includes the partner character, and a game screen is displayed on the display device 4a (drawing process) in accordance with the game play.

It should be noted that the character for which one has operation rights may be displayed or not displayed on the screen. Many online competitive games display the partner character along with one's own character on the game screen, but in FPS (first person shooting, that is, shooting games having a first person viewpoint) and similar games where the viewpoint position has been set at an eye position of the play character, the play character is not displayed.

Further still, after the above-mentioned own-terminal process (calculating the position of one's own character), the game device 13A forecasts (estimates) to which position one's own-character will move henceforth at a point in time of a future display timing. This (future position forecasting process) is carried out by performing a linear forecast or a parabolic trajectory forecast or the like based on operation information from the controller pad such as one's own character's current position, speed, and acceleration, then forecasting a position at a predetermined subsequent time. In this way, forecasted position information of one's own character is packetized and sent (position sending process) via the Internet 11 to the partner game device 13B.

The foregoing series of processes of receiving, drawing, and sending is repetitively executed with a fixed timing.

When position information of the partner character cannot be obtained during this series of repetitions, that is, when a delay in data reception or packet loss has occurred, previously obtained future forecast position information of the partner character is read out (forecast position usage process). Thus, drawing is carried out (drawing process) including the partner character and one's own character (when one's own character is displayed) using position information that has been forecasted for the partner character to be present in at that point in time.

The above-described various types of processing are also equivalently executed in the partner game device 13B. It should be that the above-described sending and receiving of data may be carried out by being relayed by the game server 12 or may be carried out directly between the game device 13A and the game device 13B. Not relaying via the game server 12 is somewhat more advantageous in terms of delays in data reception and packet loss.

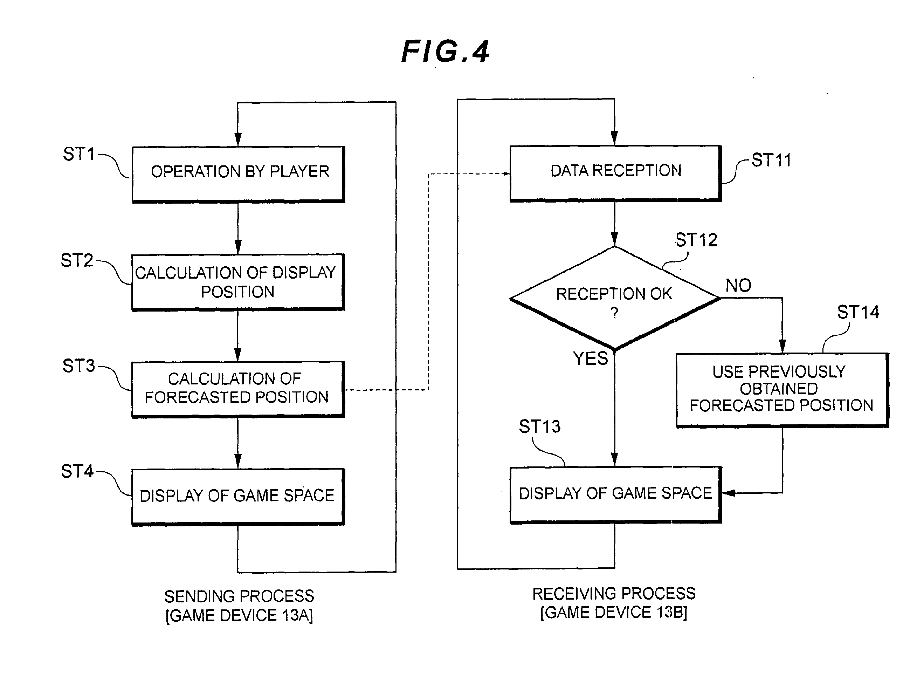

FIG. 4 specifically shows in terms of a time series the sending process executed by the game device 13A on the one hand and the receiving process executing by the game device 13B on the other hand of the processes described above in FIG. 3.

Specifically, when the user operates (step ST1) the controller pad 2, the CPU 101 calculates (step ST2) in response to that operation the position of one's own character in the game space. Following this, using this calculated position and a previous position, the CPU 101 performs (step ST3) a forecasting calculation for the position of one's own character in the game space in the next display timing and the next display timing after that as one example. Following this, the CPU 101 gives instruction (step ST4) for a process for displaying the game space at the current point in time calculated at step ST2 then returns again to the process of step ST1 and repeats the processes of the above-described steps ST1 to ST4 at fixed intervals.

In parallel to the repetition of these processes, the CPU 101 sends (position sending process) as packets to the partner game device 13B information of the position (forecasted future position), which was calculated at step ST3 and to which it is forecast one's own character will move at a future point in time, along with information of the current position. Examples of this future point in time include "a point in time at which at least one display timing has elapsed after the current display timing" and, more specifically, "a point in time at which two portions of packets of display timings constituted by a next display timing and a next display timing thereafter have elapsed."

Thus, the other game device 13B receives (step ST11) position information (current position information and forecasted future position information) of the partner character sent from the partner game device 13A. Subsequently, the CPU 101 of the game device 13B determines (step ST12) from the reception condition whether or not there is a "reception: OK" state where a result of the reception is that no delay in data reception or packet loss has occurred.

When the result of this determination is YES, that is, when there are normal reception conditions of "reception: OK," instruction is given (step ST13) by the CPU 101 of the game device 13B for the drawing process of the partner character based on position information of the partner character (namely, the character of the game device 13A). On the other hand, when the result of the determination at step ST12 is NO, that is, when rather than the normal reception conditions of "reception: OK" there are abnormal reception conditions in which a delay in data reception or packet loss has occurred, forecasted future position information, which has already been received and stored at the time of receiving the previous packet regarding the partner character, is read out (step ST14) to be used substitutively.

This makes it possible to read out, for example, the position of the partner character at one preceding display timing already received and stored at the time of receiving one preceding packet. The substitute position information that is read out is applied in the drawing process for the partner character in the above-described process of step ST13.

The processes of steps ST11 to ST14 are also repetitively executed with a fixed timing. Thus, when position information of up to two preceding packets of display timings is sent from the partner game device 13A as forecasted future position information of that device's character, and when there is loss of two consecutive packets, at step ST14 it is possible to read out forecasted position information of the partner character at two preceding display timings that have been sent with the two preceding packets.

In the case of the online competitive game system 10 of the present embodiment, each terminal (game device) 13 calculates and sends the current and future position of its own character as described above, and the partner terminal (game device) 13 receives these positions to deal with reception abnormalities (delays in data reception and packet loss and the like).

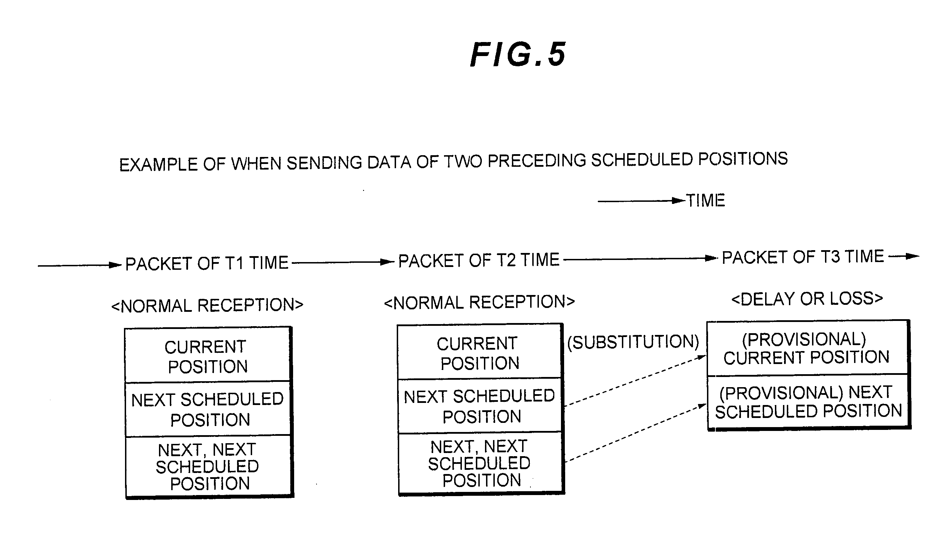

An example of this is shown schematically in FIG. 5. In this example, two preceding display timings (that is, two preceding packets) are taken in advance and forecasted as future positions. Suppose that a delay in data reception (transmission) or a packet loss occurs for a packet that should be received now at the time T3 and the packet involved cannot be received normally. The game device 13 carrying out the receiving process at this time had normal packet reception at the preceding time T2 and therefore the "next scheduled time" contained in the packet of the time T2 is set as a "provisional current position" for the current time T3 and the drawing process of the character is carried out. Simultaneously, the "next, next scheduled time" contained in the packet at the time T2 is saved as the "next provisional scheduled position" for the current time T3, thus readying the device for a delay in data reception or packet loss in the next display timing.

Thus, even when a delay in data reception (transmission) or packet loss or the like has occurred, highly accurate position information of the partner character at the current point in time can always be obtained and displayed reliably and without requiring calculation, and this enables the amount of calculation for displaying the partner character on one's own terminal to be decreased.

That is, processing that conventionally required the receiving side terminal to perform forecasting calculations of the position of the partner character from past data becomes unnecessary. As noted earlier concerning problems with conventional techniques, when the receiving side performs forecasting calculations of the position of the partner character, the positions of all the characters must be calculated and the amount of calculation increases by a corresponding amount. In contrast to this, in the case of the online competitive game system 10 of the present embodiment, the amount of processing for one's own terminal is processed at one's own terminal and that position information is simply sent and it is not necessary to include time information in the packet to be sent. With this "processing at one's own terminal," increases in the amount of calculation that would converge on the partner terminal can be dispersed and consequently it is possible to achieve reductions and equalization of the amount of calculation as a whole.

As a result, the calculation capacity of the CPU can be reduced by an amount proportional to this decrease in the amount of calculation, which enables reductions in the manufacturing costs of the information processing devices that constitute each of the game terminals and promotes improvements in the game environment.

Additionally, partner characters can always be drawn at each display timing based on appropriate position information and therefore it is possible to eliminate unnaturalness in the drawing screens of each terminal such as "gaps" in which the partner character is not displayed momentarily or the partner character is displayed in a jumping manner. Thus, it becomes possible to improve picture quality and provide a game environment of excellent quality.

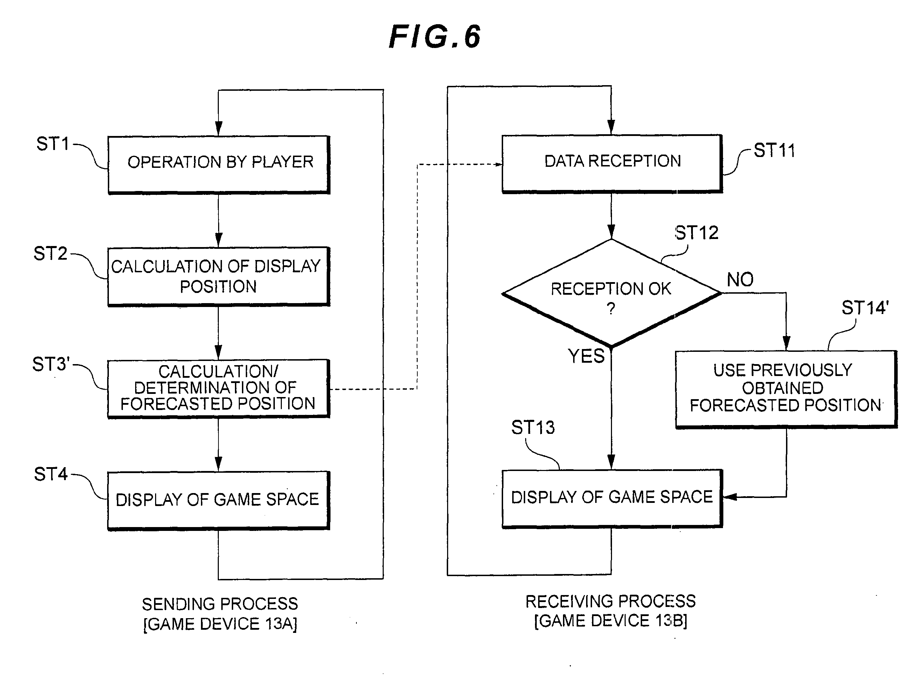

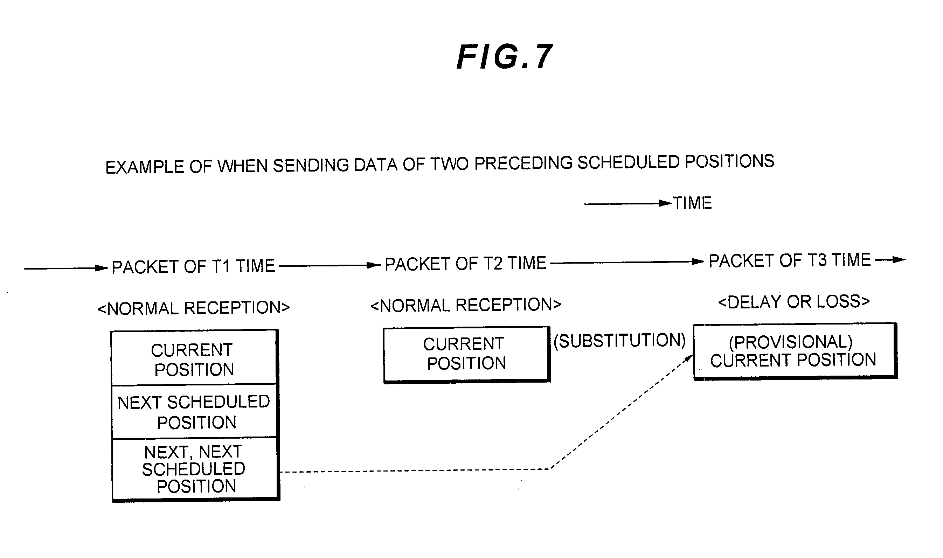

FIG. 6 and FIG. 7 show a modified example of the foregoing embodiment. ln this modified example, when a future position of one's own character is forecasted in one's own terminal game device 13A, if that position has not changed from the previously forecasted position, then forecasted position information of the unchanged portion is not sent (step ST3'). ln this case, when an occurrence of data delay or packet loss is detected in the partner terminal (game device 13B) when it is the next timing for receiving this "unsent forecasted position information," then the game device 13B goes back to the two-previous packet to read the previous forecasted position and carries out drawing (step ST14').

FIG. 7 shows one example of this. As shown in this figure, forecasted position information is not included in the packet of the time T2 and when supposing a situation in which data delay or packet loss has occurred at the time of packet receiving at the time T3, then the "next, next scheduled position" contained in the packet at the time of the time T1, which is the two-previous packet, is used for the current position information at the time T3. By processing in this manner, it is possible to reduce the calculation load and the transmission load in the sending process of forecasted positions. Accordingly, this makes it possible to achieve an operation and effect equivalent to the foregoing embodiment.

It should be noted that the present invention is not limited to the foregoing embodiments and may be achieved by further various embodiments within the scope of the claims. For example, the forecasted future position in the sending process of one's own terminal is not limited to the display time information of the one-previous or two-previous packet as described above, and this may be set so that forecasted information of the position of one's own character is calculated at the time of displaying the three-previous or an earlier packet and this is included in the packet to be sent. Furthermore, the information processing device of the present invention includes not only game machines but also PCs, mobile telephone terminals, arcade games, and the like. Moreover, the network by which the plurality of information processing devices are connected is not limited to the Internet and may be a WAN, a MAN (metropolitan area network), a LAN (local area network), a PAN (personal area network), or a public telephone line or the like and may be wired or wireless.

### Industrial Applicability

As described above, with the information processing device according to the present invention and the data processing method thereof, even when a delay in data transmission or packet loss occurs, each terminal obtains and displays highly accurate position information of the partner character in a manner that is always simple and does not require calculation, and since this enables the amount of calculation for displaying the partner character in each terminal to be decreased, it can be widely used as described above in various types of information processing devices, equipment, and businesses and the like involving devices such as personal computers (PCs), household game machines, mobile game devices, mobile telephones, mobile information terminals, and arcade game machines.

## Claims

1. An information processing device that is communicably connected on a network and is capable of executing online a competitive type electronic game with a game opponent, comprising:
storage means for storing information resources including procedures for the competitive type electronic game,
operation means for operation by an operator,
a calculation device having calculation means for calculating a forecasted future position of an operation target object in a virtual space in response to operation performed by the operator on the operation means, sending means for packetizing and sending information for the competitive type electronic game including the forecasted future position via the network to the opponent, and receiving means for receiving packets sent from the opponent via the network, and
image generation means for, when an omission or delay has occurred in reception of the packet, generating a game image including the competitionve target object using the forecasted future position contained in a packet that has been received prior to a current reception.

2. The information processing device according to claim 1, wherein
the calculation means has determination means for determining whether or not the forecasted future position has changed from a previously calculated forecasted position, and
the sending means sends information of the forecasted future position when a determination is made by the determination means that the forecasted future position has changed.

3. The information processing device according to claim 1, wherein information for the competitive type electronic game includes the forecasted future position of at least one display timing later than a current display timing.

4. The information processing device according to claim 1, wherein, when an omission or delay has occurred in reception of the packet, the image generation means generates a game image including the competition target object using the forecasted future position contained in a packet that has been received at a display timing two or more timings earlier than a current reception.

5. A data processing method in an information processing device that is communicably connected on a network and is capable of executing online a competitive type electronic game with a game opponent,
the data processing method comprising:
a step of storing information resources including procedures for the competitive type electronic game;
a step of calculating a forecasted future position of an operation target object in a virtual space in response to operation by an operator;
a step of packetizing and sending information for the competitive type electronic game including the forecasted future position via the network to the opponent;
a step of receiving packets sent from the opponent via the network, and
a step of, when an omission or delay has occurred in reception of the packet, generating a game image including the competition target object using the forecasted future position contained in a packet that has been received prior to a current reception.

6. The data processing method according to claim 5, wherein information including the forecasted future position of at least one display timing later than a current display timing is used as information for the competitive type electronic game.

7. A program for executing on a computer a procedure of each step described in claim 5.

8. A computer-readable recording medium on which is recorded a program for executing on a computer a procedure of each step described in claim 5.

## Amended claims

### Amended claims under Art. 19.1 PCT

**1.** (amended) An information processing device that is communicably connected on a network and is capable of executing online a competitive type electronic game with a game opponent, comprising:
storage means for storing information resources including procedures for the competitive type electronic game,
operation means for operation by an operator,
a calculation device having calculation means for executing processing of the competitive type electronic game based on the procedures stored in the storage means and calculating a forecasted future position of an operation target object in a virtual space in response to operation performed by the operator on the operation means, sending means for packetizing and sending information for the competitive type electronic game including the forecasted future position via the network to the opponent, and receiving means for receiving packets sent from the opponent via the network, and
image generation means for, when an omission or delay has occurred in reception of the packet, generating a game image including the competition target object using the forecasted future position contained in a packet that has been received prior to a current reception, wherein
the calculation means has determination means for determining whether or not the forecasted future position has changed from a previously calculated forecasted position, and
the sending means sends information of the forecasted future position when a determination has been made by the determination means that the forecasted future position has changed.

**2.** (deleted)

**3.** The information processing device according to claim 1, wherein information for the competitive type electronic game includes the forecasted future position of at least one display timing later than a current display timing.

**4.** The information processing device according to claim 1, wherein, when an omission or delay has occurred in reception of the packet, the image generation means generates a game image including the competition target object using the forecasted future position contained in a packet that has been received at a display timing two or more timings earlier than a current reception.

**5.** (amended) A data processing method in an information processing device that is communicably connected on a network and is capable of executing online a competitive type electronic game with a game opponent and is provided with a calculation device having storage means, operation means, calculation means, sending means, and receiving means, and provided with image generation means,
the data processing method comprising:
a step of storing information resources including procedures for the competitive type electronic game in use of the storage means:
a step of executing processing of the competitive type electronic game in use of the calculation means based on the procedures stored in the storage means and calculating a forecasted future position of an operation target object in a virtual space in response to operation by an operator;
a step of packetizing and sending information for the competitive type electronic game including the forecasted future position via the network to the opponent in use of the sending means;
a step of receiving packets sent from the opponent via the network in use of the receiving means; and
a step of, when an omission or delay has occurred in reception of the packet, generating a game image including the competition target object using the forecasted future position contained in a packet that has been received prior to a current reception in use of the image generation means, wherein
the calculation means includes determination means, and the step of calculating has a step of determining whether or not the forecasted future position has changed from a previously calculated forecasted position in use of the determination means, and
in the step of sending, information relating to the forecasted future position is sent by the sending means when a determination has been made, in the step of determining, that the forecasted future position has changed.

**6.** The data processing method according to claim 5, wherein information including the forecasted future position of at least one display timing later than a current display timing is used as information for the competitive type electronic game.

**7.** A program for executing on a computer a procedure of each step described in claim 5.

**8.** A computer-readable recording medium on which is recorded a program for executing on a computer a procedure of each step described in claim 5.
